# EUROPEAN PATENT APPLICATION

(11) **EP 4 718 807 A1**
(43) Date of publication of application: **01.04.2026**
(21) Application number: 24830701.9
(22) Date of filing: 24.06.2024
(51) Int. Cl.: H04L 43/08

(54) **SERVICE CODE BLOCK STREAM TRANSMISSION METHOD, AND QUALITY OF SERVICE MONITORING METHOD AND SYSTEM**

(30) Priority: 25.06.2023 CN 202310751470
(71) Applicant: ZTE CORPORATION, Shenzhen, Guangdong 518057 (CN)
(72) Inventor: LIU, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/101033
(87) International publication number: WO 2025/002059

(57) **Abstract**

The present application provides a method for transmitting a service code block stream, a method and a system for monitoring service quality, relating to the technical field of communications. In the present application, a target service code block stream sent by a second communication device is received. An original OAM code block is modified into a first OAM code block in the target service code block stream. A value of a target field of the first OAM code block is a target value corresponding to the target TCM segment. A modified target service code block stream is transmitted.

## Description

### CROSS-REFERENCE TO RELATED APPLICATIONS

This application claims priority to Chinese Patent Application No. 202310751470.0, filed with the State Intellectual Property Office of China on June 25, 2023, the entire disclosure of which is incorporated herein by reference.

### TECHNICAL FIELD

The present application relates to the technical field of communications, and in particular to a method for transmitting a service code block stream, a method and a system for monitoring service quality.

### BACKGROUND

The rapid increase in user network information traffic has led to the rapid development of the information transmission bandwidth in the communication network. The interface bandwidth speed of the communication equipments has increased from 10M (unit: bit/second, same as below) to 100G, and a large number of commercial 100G optical modules have been put into use in the market. Currently, 400G optical modules have been developed, but they are expensive, exceeding the price of four 100G optical modules, thereby resulting in a lack of commercial economic value for 400G optical modules. To transmit 400G services over 100G optical modules, the International Standards Organization defined the Flexible Ethernet (FlexE) protocol. Based on the FlexE protocol, four 100G optical modules are combined to form a 400G transmission channel, which is equivalent to the transmission speed of a single 400G optical module, thereby meeting the requirements for 400G services without increasing costs.

When using the FlexE protocol to carry client service code stream, the Metro Transport Network (MTN) standard defines an Operation Administration Maintenance (OAM) block for monitoring channel carrying quality when transmitting the client service code stream. This block is used to detect the service quality of the pipeline carrying client services, such as code error rate, delay time, and service abandonment.

However, the current MTN standard can only achieve end-to-end OAM functions of the carrying pipeline, which cannot achieve tandem connection monitoring (TCM) for the service pipeline, so that service quality of different network layers (each layer is a sub-network) cannot be effectively monitored by layersm, resulting in poor monitoring of pipeline quality.

### SUMMARY

The main purpose of the present application is to provide a method for transmitting a service code block stream, a method and a system for monitoring service quality, to solve the problems that the service quality of different network layers of a service pipeline cannot be effectively monitored by layers, and the monitoring for the pipeline quality is poor.

To achieve above objectives, the present application provides a method for transmitting a service code block stream, applied to a first communication device, including:
receiving a target service code block stream sent by a second communication device, the first communication device and the second communication device being communication devices in a service pipeline carrying a target service, and the first communication device being configured as a source terminal of a target tandem connection monitor, abbreviated as TCM, segment;
modifying an original operation administration maintenance, abbreviated as OAM, code block into a first OAM code block in the target service code block stream, a value of a target field of the first OAM code block being a target value corresponding to the target TCM segment; and
transmitting a modified target service code block stream.

**In** addition, to achieve above objectives, the present application further provides a method for monitoring service quality, applied to a third communication device, including:
receiving a target service code block stream sent by a fourth communication device, the third communication device and the fourth communication device being communication devices in a service pipeline carrying a target service, and the third communication device being configured as a sink terminal for a target TCM segment;
detecting a first OAM code block in the target service code block stream to monitor service quality of the target TCM segment, a value of a target field of the first OAM code block being a target value corresponding to the target TCM segment; and
restoring the first OAM code block to an original OAM code block in the target service code block stream, and transmitting a restored target service code block stream to a fifth communication device, the original OAM code block referring to the OAM code block before being modified into the first OAM code block, and the fifth communication device being a communication device located downstream of the third communication device in the service pipeline.

In addition, to achieve above objectives, the present application further provides a system for monitoring service quality, including:
a first communication device, configured to implement the method for transmitting the service code block stream as mentioned above; and
a third communication device, configured to implement the method for monitoring service quality as mentioned above.

In addition, to achieve above objectives, the present application further provides a communication device, including a processor and a memory, the memory storing a program or an instruction executable by the processor. When the program or the instruction is executed by the processor, the method for transmitting the service code block stream as mentioned above is implemented, and/or the method for monitoring service quality as mentioned above is implemented.

In addition, to achieve above objectives, the present application further provides a computer-readable storage medium, storing a program or an instruction. When the program or the instruction is executed by a processor, the method for transmitting the service code block stream as mentioned above is implemented, and/or the method for monitoring service quality as mentioned above is implemented.

### BRIEF DESCRIPTION OF THE DRAWINGS

To more clearly illustrate technical solutions in the embodiments of the present application or the related art, the following will briefly introduce the drawings that need to be used in the description of the embodiments or the related art. Obviously, the drawings in the following description are only some embodiments of the present application. For those skilled in the art, without creative effort, other drawings can be obtained according to the structures shown in these drawings.
FIG. 1 is a schematic diagram of a 400G transmission channel in the related art.
FIG. 2 is a schematic diagram of encoding rules of 64/66 encoding in the related art.
FIG. 3 is a schematic diagram of a service code stream in the related art.
FIG. 4 is a schematic diagram showing inserting an OAM code block into the service code stream in the related art.
FIG. 5 is a schematic diagram showing implementing OAM functions in the related art.
FIG. 6 is a schematic structural diagram of the OAM code block in the related art.
FIG. 7 is a schematic diagram of a service channel carrying the service according to an embodiment.
FIG. 8 is a flowchart showing transmission of the service code block stream according to an embodiment of the present application.
FIG. 9 is a flowchart of a method for monitoring service quality according to an embodiment of the present application.
FIG. 10 is a schematic diagram of the OAM code block according to an embodiment of the present application.
FIG. 11 is a schematic diagram showing segment monitoring according to an embodiment of the present application.
FIG. 12 is a schematic diagram of the OAM code block according to an embodiment of the present application.
FIG. 13 is a schematic diagram of the OAM code block according to an embodiment of the present application.
FIG. 14 is a schematic diagram of the OAM code block according to an embodiment of the present application.
FIG. 15 is a schematic diagram of the OAM code block according to an embodiment of the present application.
FIG. 16 is a schematic diagram of the OAM code block according to an embodiment of the present application.
FIG. 17 is a schematic diagram showing a channel layer implements code error detection.
FIG. 18 is a schematic diagram of the OAM code block carrying the BIP calculation result of the sending terminal according to an embodiment of the present application.
FIG. 19 is a schematic diagram showing a layered TCM implements error monitoring according to an embodiment of the present application.
FIG. 20 is a schematic diagram of the OAM code block carrying the BIP calculation result of the sending terminal according to an embodiment of the present application.
FIG. 21 is a schematic diagram showing a layered TCM implements error monitoring according to an embodiment of the present application.
FIG. 22 is a schematic diagram of the OAM code block carrying the BIP calculation result of the sending terminal according to an embodiment of the present application.
FIG. 23 is a schematic diagram of the OAM code block carrying the BIP calculation result of the sending terminal according to an embodiment of the present application.
FIG. 24 is a schematic diagram of the OAM code block carrying the BIP calculation result of the sending terminal according to an embodiment of the present application.
FIG. 25 is a schematic diagram of the OAM code block carrying the BIP calculation result of the sending terminal according to an embodiment of the present application.
FIG. 26 is a schematic structural diagram of a system for monitoring service quality according to an embodiment of the present application.
FIG. 27 is a structural block diagram of a communication device according to an embodiment of the present application.

### DETAILED DESCRIPTION OF THE EMBODIMENTS

Embodiments will be described in detail herein, as illustrated in the accompanying drawings. In the following description, when it is related to the accompanying drawings, unless otherwise indicated, identical numerals in different drawings represent identical or similar elements. The implementation methods described in following embodiments do not represent all embodiments consistent with the present application. Rather, they are merely examples of apparatuses and methods consistent with certain aspects of the present application, as detailed in the appended claims.

The continued growth of communication network traffic has driven a rapid increase in the service bandwidth of communication equipments. Interface speeds have increased from 10M to 100M, then is increased to 1G or 10G, and the service speed increases several times every few years, to meet requirements of the network traffic.

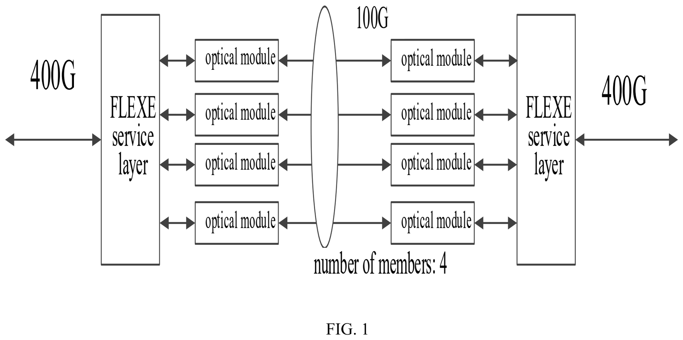

Currently, speeds of commercial optical modules for communication equipments have reached 100G and are widely used in the market. As optical module speeds exceed 100G, the technical challenges in developing optical modules have increased significantly, leading to a rapid increase in production costs. In the evolution from 100G to 400G, although 400G optical modules have been developed, they are expensive, exceeding the price of four 100G modules, making 400G optical modules lack of commercial economic value. To meet transmission requirements for 400G services and enable the transmission of 400G services over 100G modules without increasing costs, the International Standards Organization (ISO) defined the FlexE protocol. The FlexE protocol combines multiple 100G optical modules to form a transmission channel with high business speed. As shown in FIG. 1, four 100G optical modules are combined via the FlexE protocol to form a 400G transmission channel, which is equivalent to the service transmission speed of a single 400G module. This not only meets the 400G service transmission requirements but also addresses the problem of the economic value of service transmission.

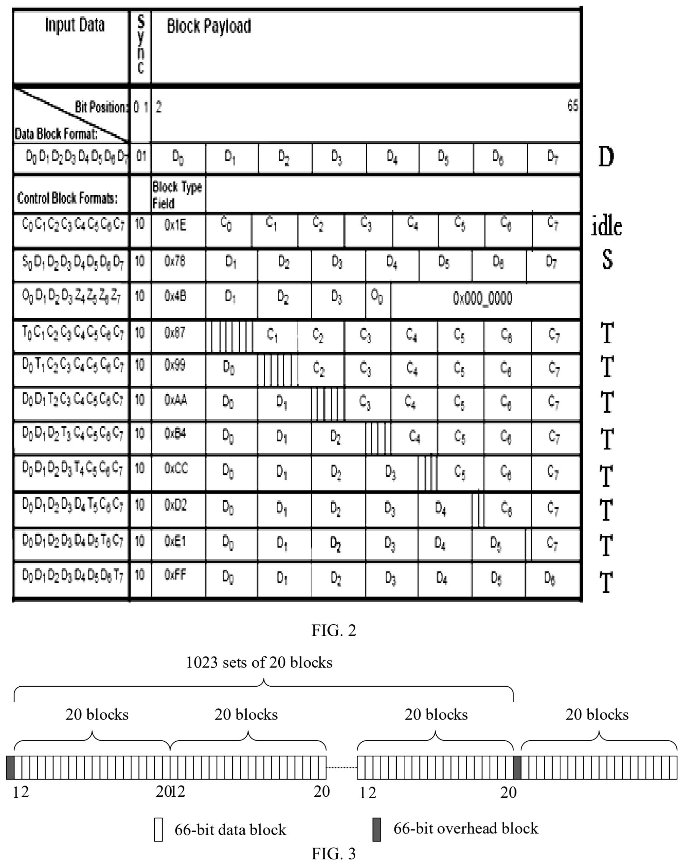

For 100G physical interface rates, when the FlexE protocol is used to carry client services, client messages undergo 64/66 encoding before transmission. FIG. 2 illustrates the 64/66 encoding rules developed by the IEEE. For the 64/66 encoding process, the client message bytes are divided into a long group of 8 bytes (64 bits), then the 64 bits are encoded into 66-bit code blocks (information blocks), which is composed of first 2 bits and last 64 bits (8 bytes). The first 2 bits are the synchronization header bits, which separate the information blocks into two types: the data block (the first two bits are 01, indicating that the code block is the data block) and the control block (the first two bits are 10, indicating that the block is the control block). The control block can be further divided into different types, distinguished by the first byte in the control block. The control block includes: the idle block (the control type value of the first byte is 0x1E, also known as the IDLE block or the I block), the O code block (the control type value of the first byte is 0x4B), the S code block (the control type value of the first byte is 0x78), and the T code block (the control type value of the first byte includes 8 types, such as 0x87, 0x99....0xFF, representing T0, T1...T7 respectively). Client messages will be performed 64/66 encoded and then are transmitted from the optical port. During the reception process, the optical port positions the 66-bit code blocks in the received data stream and recovers the original client message from the 66-bit code blocks. The FlexE protocol operates at the 66-bit code block layer, as shown in FIG. 3. For the 100G service, every 20 66-bit code blocks are divided into a code block group. Each group includes 20 code blocks, representing 20 time slots, each time slots represents the 5G bandwidth speed. When transmitting 66-bit code blocks, the FlexE overhead block is inserted after every 1023 code block groups (1023*20 code blocks) are sent, as shown in the black filled block in FIG. 3. After inserting the overhead block, client code blocks are sent again. After the second 1023*20 client code blocks are sent, another overhead block is inserted, and so on. Overhead blocks are periodically inserted during the transmission process of client code blocks, and the interval between two adjacent overhead blocks is provides with 1023*20 client code blocks.

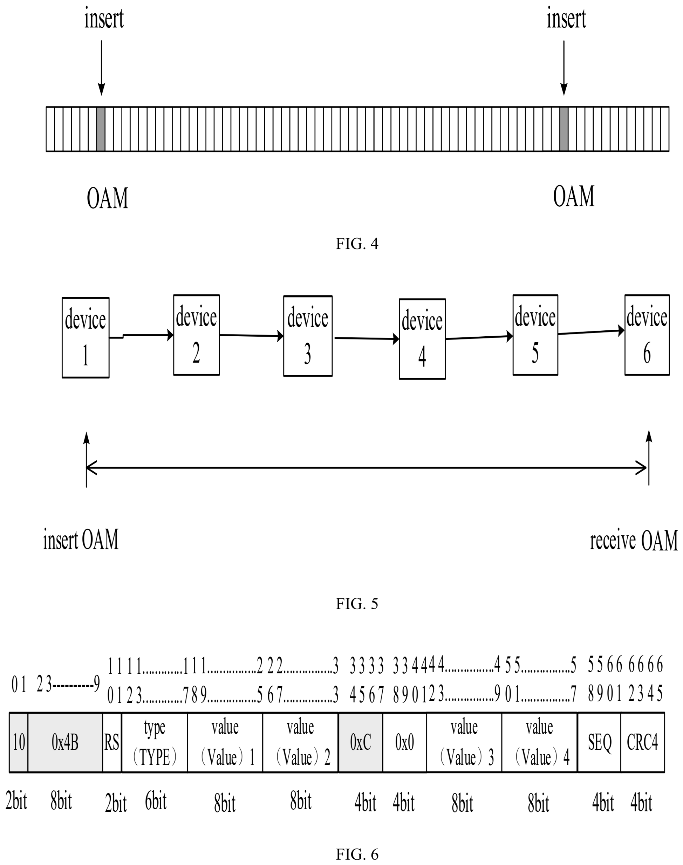

Client messages are carried and transmitted in one or more time slots specified by the FlexE protocol. To detect the service quality of the network carrying client messages, as shown in FIG. 4, an OAM code block (which carries maintenance and management information) is inserted into the client message code block stream. In this way, the OAM code block is carried and transmitted together with the client message code blocks, and the transmission path of the OAM code block is same as the transmission path of the client message code block. The OAM code block can be used to monitor the service quality of the carrying pipeline. As shown in FIG. 5, the device 1 inserts an OAM code block in a sending client message block. The OAM code block and the client message block are transmitted together over the network, and the OAM code block is detected by the receiving device 6. Analysis of the OAM content can monitor pipeline quality. The OAM code block carries different types of values, to implement various monitoring functions, such as code error detection, channel connection monitoring, connection verification, far-end code error, far-end fault, delay measurement, fast protection switching, client signal failure, and client signal type indication. For example, if the sending device continuously transmits OAM code blocks with a fixed period and the receiving terminal fails to receive the OAM code block for several consecutive periods, it can be determined that the pipeline carrying the client service has experienced an interruption, and a connection monitoring fault can be reported.

FIG. 6 shows an OAM code block format in the related art, which expands O code block format in the Ethernet standard, and the extension format is the OAM code block format. In the Ethernet standard, the O code block is a control code block Two-bit synchronization header has a value of "10", and the control field is "0x4B". The 34th to 37th bits are the O code block sequence value, with different sequence values representing different O code block contents. The Ethernet standard uses sequence values of 0x0, 0x1, 0x2, and 0xF. China Mobile enterprise standard uses sequence value 0xC, and the O code block with sequence value 0xC are used as the OAM code block. The OAM code block uses the combination of the synchronization header "10", the control field "0x4B", and the O sequence value "0xC" as the identification value. Code blocks that match this identification value are OAM code blocks. The 10th and 11th bits in the OAM code block are the reserved bits. The 12th to 17th bits are the type field of the OAM code block, which can be used for various types of OAM code blocks. The 18th to 33rd bits, and 42nd to 57th bits are used to carry contents of the OAM code block. The 38th and 41st bits are reserved bits. The 58th and 61st bits are used to transmit sequence numbers of multiple OAM code blocks. The 62nd and 65th bits are used to transmit the CRC check value. The sending device inserts the OAM code block when transmitting the client code block. The receiving device then checks the OAM code block in the client service code block when receiving, to determine the service quality of the network pipeline.

Current OAM functions can monitor the service quality between the source terminal and the sink terminal. In practical applications, networks span vast geographical areas and involve network equipments from multiple vendors. These networks constructed from various vendors, are relayed. Current OAM functions can only detect failures or interruptions between the source terminal and the sink terminal, but cannot pinpoint the sub-network within which the failure occurred, nor can they implement continuous protection switching within smaller sub-network ranges.

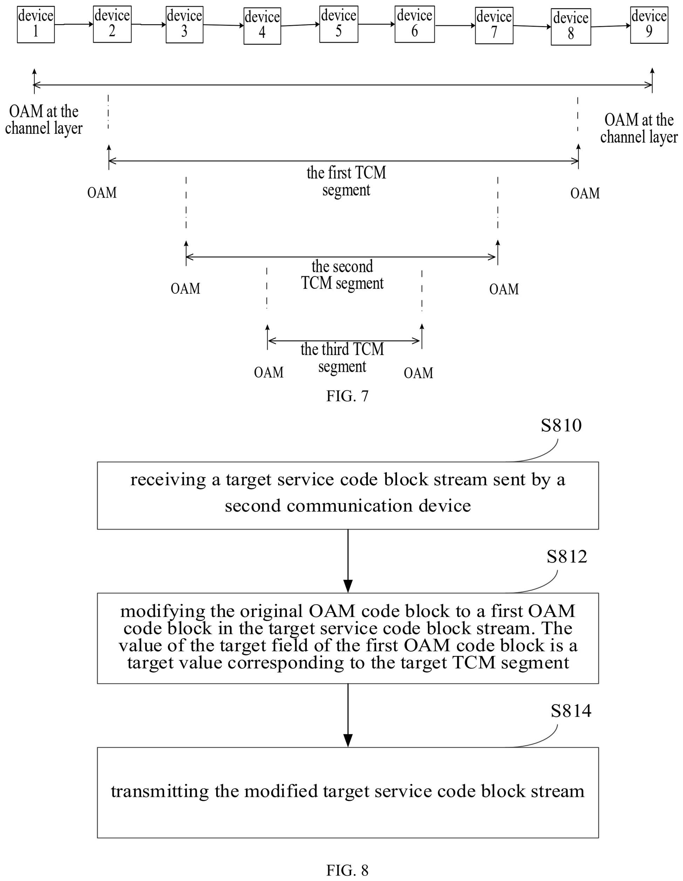

Therefore, multi-level service quality monitoring is required for the service pipeline carrying client services. To address this technical problem, embodiments of the present application provide a method for transmitting a service code block stream and a method for monitoring service quality, thereby achieving multi-level service quality monitoring of the service pipeline carrying client services. In this embodiment, multi-segment (also called multi-layer) monitoring is implemented for the service pipeline, as shown in FIG. 7, to implement 3 layers of TCM monitoring requirements. Three additional layers of service monitoring are added to the carrying pipeline between the source terminal and the sink terminal, and each layer represents a sub-network, to monitor the service quality of each sub-network. When a failure such as an interruption occurs within a sub-network, protection switching is performed within the sub-network. Devices outside the sub-network do not involve in the protection switching, reducing the number of devices involved in the protection switching. In FIG. 7, client services are carried between devices 1 and 9. The device 1 sends client code blocks and inserts OAM code blocks. The device 9 receives the client code blocks and OAM code blocks, and monitors the service quality of the client service carrying pipeline. This layer of OAM is called channel layer OAM. Three layers of TCM are enabled between devices 1 and 9. The first layer of TCM is enabled between devices 2 and 8. The second layer of TCM is enabled between devices 3 and 7, and the third layer of TCM is enabled between devices 4 and 6. If a failure occurs in the device 5 and causes a failure in the service carrying pipeline, the third layer of TCM between devices 4 and 6 detects the failure first and rapidly switches over to restore client services, which ensures that devices 1 and 4 and devices 6 and 9 are unaffected and do not need to participate in the protection switching when the device 5 fails.

The technical solutions of embodiments in the present application are described below with reference to the accompanying drawings.

FIG. 8 is a flowchart of a method for transmitting a service code block stream according to an embodiment of the present application. This method can be applied to a first communication device. As shown in FIG. 8, the method for transmitting the service code block stream primarily includes the following steps.

S810, receiving a target service code block stream sent by a second communication device. The first communication device and the second communication device are communication devices in a service pipeline carrying the target service. The first communication device is configured as the source terminal of a target tandem connection monitoring (TCM) segment.

In this embodiment of the present application, the first communication device can be an intermediate node in the service pipeline of the target service, namely, a communication device in the service pipeline of the target service excluding the sending terminal and the receiving terminal. The second communication device can be the sending terminal in the service pipeline of the target service, or a downstream node of the sending terminal in the service pipeline of the target service. The first communication device is the downstream node of the second communication device.

For example, in the service pipeline shown in FIG. 7, the second communication device may be the device 1, and the first communication device may be the device 2. Or, the second communication device may be the device 2 and the first communication device may be the device 3. Or the second communication device may be the device 3 and the first communication device may be the device 4.

In this embodiment of the present application, in the service pipeline of the target service, the first communication device is configured as the source terminal of the target TCM segment. Therefore, in this embodiment of the present application, the first communication device is not the upstream node closest to the receiving terminal of the service pipeline. For example, in FIG. 7, the device 2 is configured as the source terminal of the first TCM segment (also called the first layer of TCM), the device 3 is configured as the source terminal of the second TCM segment (also called the second layer of TCM), and the device 4 is configured as the source terminal of the third TCM segment (also called the third layer of TCM).

In an embodiment of the present application, the OAM code block carries maintenance and management information.

In specific applications, at least one TCM segment can be preset for the service channel of the target service, and the source terminal and the sink terminal can be set for each TCM segment. After receives a target service code block stream of the target service, the communication device configured as the source terminal will process it according to the method in the embodiments of the present application.

S812, modifying the original OAM code block to a first OAM code block in the target service code block stream. The value of the target field of the first OAM code block is a target value corresponding to the target TCM segment.

In an embodiment of the present application, after receiving a target service code block stream, the first communication device configured as a source terminal for a target TCM segment modifies an original OAM code block into a first OAM code block in the target service code block stream. The value of the target field of the first OAM code block is a target value corresponding to the target TCM segment. The value of the target field indicates to subsequent communication devices, and the first OAM code block is used to detect the service quality of the target TCM segment.

In an embodiment, the first communication device may periodically modify the original OAM code block into the first OAM code block in the target service code block stream at a preset code block interval. Of course, it is not limited to this. In actual applications, the original OAM code block may be modified into the first OAM code block at a different period than the preset period. The specific period may be determined based on the actual service quality state to be detected.

In an embodiment, the step of modifying the original OAM code block into the first OAM code block in the target service code block stream includes following steps.

Step A10, modifying the initial value of the target field of the OAM code block in the target service code block stream to the target value, thereby modifying the original OAM code block into the first OAM code block in the target service code block stream.

The step of modifying the initial value of the target field of the OAM code block to the target value in the target service code block stream includes following steps.

Step B10, periodically modifying the initial value of the target field of the OAM code block to the target value in the target service code block stream at a preset code block interval.

S814, transmitting the modified target service code block stream.

In this embodiment of the present application, the service pipeline of a target service is divided into multiple TCM segments. The source terminal of the TCM segment modifies the original OAM code block into a first OAM code block in the target service code stream. The value of the target field of the first OAM code block is the target value corresponding to the TCM segment. In this way, the sink segment of the TCM segment can monitor the service quality of the corresponding TCM segment by detecting the first OAM code block, thereby achieving layered or segmented monitoring of the service pipeline, thereby improving the monitoring of pipeline quality.

To provide TCM on the network, the type of the OAM information code block for the layer of TCM is defined. Source devices at different layers of TCM (for example, the first, second, and third TCM segments) need to insert OAM code blocks of this layer type. Sink devices receive the OAM code blocks of TCM of this layer type, to analyze and detect the service quality of this TCM segment at this layer. However, this implementation needs the source devices of this TCM segment at this layer to insert new OAM code blocks (OAM code blocks of TCM of this layer type). The source devices at each layer of the TCM segment also need to insert OAM code blocks. Inserting OAM code blocks increases the number of service code block streams, reducing transmission speeds. Consequently, some idle code blocks need to be deleted to keep the speed of the service code block stream unchanged. However, in some application scenarios, due to low client speeds and a small number of idle code blocks in the client service stream, new OAM code blocks cannot be inserted into the target service code block stream, thus TCM of the service pipeline cannot be achieved.

Based on this, in the embodiment of the present application, the service pipeline of the target service can be divided into multiple TCM segments. The source terminal of each TCM segment modifies the original OAM code block into a first OAM code block in the target service code stream. The value of the target field of the first OAM code block is the target value corresponding to the TCM segment, thereby achieving the TCM without inserting additional OAM code blocks of TCM. After receiving the first OAM code block, the sink terminal of the TCM segment restores the first OAM code block to the original OAM code block and then forwards it to the downstream device. The sink terminal of the TCM segment extracts the information of the current layer of TCM to achieve the maintenance and management functions of the current layer of TCM.

In the technical solution of this embodiment, the source device of each layer of TCM does not need to insert a new OAM code block. Instead, it modifies the type of the received OAM code block to the OAM type at the current layer of TCM. The original OAM code block type is then restored at the sink device at the layer of TCM. In this way, the layer of TCM can directly use the OAM code block at the channel layer to disguise the OAM code block of the type at the current layer of TCM, thus achieving the maintenance and management functions without inserting additional OAM code blocks. In an embodiment of the present application, OAM information of all layers of TCM can be transmitted directly by using the OAM code block at the channel layer. By expanding the TCM field based on existing OAM, layered TCM is implemented in the network, thereby solving the current technical problems that the internet service quality of different layers in a service pipeline cannot be monitored effectively and the monitoring of pipeline quality is poor.

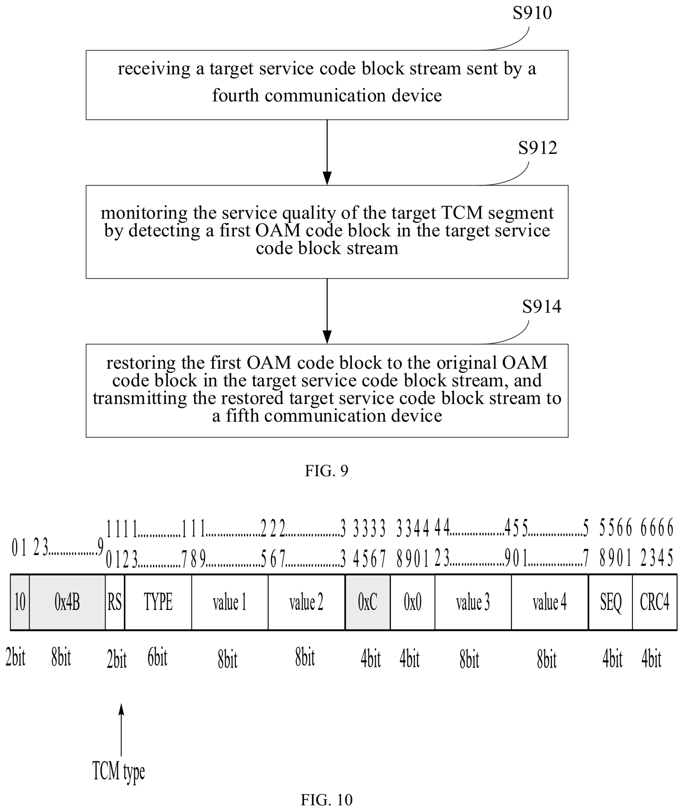

FIG. 9 shows a flowchart of a method for monitoring service quality according to an embodiment of the present application. This method can be applied to a third communication device. As shown in FIG. 9, the method for transmitting the service code block stream primarily includes the following steps.

S910, receiving a target service code block stream sent by a fourth communication device. The third and fourth communication devices are communication devices in a service pipeline carrying the target service, and the third communication device is configured as a sink terminal of the target TCM segment.

In this embodiment of the present application, the third communication device may be an intermediate node in the service pipeline of the target service, that is, the third communication device may be a communication device other than the sending terminal and the receiving terminal in the service pipeline of the target service. The fourth communication device may be an intermediate node in the service pipeline of the target service, and the third communication device may be a downstream node of the fourth communication device.

For example, in the service pipeline shown in FIG. 7, the third communication device may be the device 6, and the fourth communication device may be the device 5. Or, the third communication device may be the device 7 and the fourth communication device may be the device 6. Or, the third communication device may be the device 8 and the fourth communication device may be the device 7.

For this embodiment of the present application, in the service pipeline of the target service, the third communication device is configured as the sink terminal of the target TCM segment. Therefore, in this embodiment of the present application, the third communication device is not the downstream node closest to the sending terminal of the service pipeline. For example, in FIG. 7, the device 8 is configured as the sink terminal of the first TCM segment (also called the first layer of TCM). The device 7 is configured as the sink terminal of the second TCM segment (also called the second layer of TCM), and the device 6 is configured as the sink terminal of the third TCM segment (also called the third layer of TCM).

In the specific application, at least one TCM segment can be preset for the service channel of the target service. The source terminal and the sink terminal of each TCM segment can be set. After receiving the target service code block stream of the target service, the communication device configured as the sink terminal can be used to process the method in the embodiments of the present application.

In an embodiment of the present application, the third communication device may be the communication device corresponding to the first communication device in the above embodiments. The first communication device is the source terminal of the target TCM segment, and the third communication device is the sink terminal of the target TCM segment.

S912, monitoring the service quality of the target TCM segment by detecting a first OAM code block in the target service code block stream. The value of the target field of the first OAM code block is a target value corresponding to the target TCM segment.

In an embodiment of the present application, the third communication device may detect the first OAM code block in the target service code block stream based on the value of the target field of the OAM code block, and monitor the service quality of the target TCM segment by detecting the first OAM code block. For example, by detecting the first OAM code block in the target service code stream, the service quality state of the detection pipeline of the target TCM segment, such as code error rate, delay time, and service abandonment, can be monitored.

In an embodiment, S912 may include the following steps.

Step C10, detecting the first OAM code block in the target service code block stream.

Step C20, determining whether a service carrying pipeline between a source terminal of the target TCM segment and the sink terminal of the target TCM segment is faulty according to a detected first OAM code block.

For example, the transmission delay of the target TCM segment can be determined based on the time when the first OAM code block is detected, or whether there is packet loss in the target TCM segment can be determined based on the number of first OAM code blocks detected within a preset time.

In an embodiment, if it is determined that a fault exists in the service carrying pipeline between the source terminal of the target TCM segment and the sink terminal of the target TCM segment, the service carrying pipeline between the source terminal of the target TCM segment and the sink terminal of the target TCM segment is switched. For example, the transmission node between the source terminal of the target TCM segment and the sink terminal of the target TCM segment may be switched.

S914, restoring the first OAM code block to the original OAM code block in the target service code block stream, and transmitting the restored target service code block stream to a fifth communication device. The original OAM code block is the OAM code block before being modified to the first OAM code block. The fifth communication device is a communication device downstream of the third communication device in the service pipeline.

The fifth communication device is a downstream device of the third communication device. The fifth communication device may be a node in the service pipeline of the target service. For example, in FIG. 7, the fifth communication device may be the device 7, the device 8, or the device 9.

Through the technical solutions in the embodiments of the present application, a third communication device detects a first OAM code block by detecting the value of a target field in an OAM code block. Based on the detection result of the first OAM code block, the third device monitors the service quality of a target TCM segment, thereby implementing multi-level service quality monitoring for a service pipeline carrying client services.

In an embodiment, the step of restoring the first OAM code block to the original OAM code block in the target service code block stream includes following steps.

Step D10, restoring the target value of the target field of the OAM code block to an initial value in the target service code block stream, thereby restoring the first OAM code block to the original OAM code block in the target service code block stream. The initial value is the value before being modified to the target value.

The step of restoring the target value of the target field of the OAM code block to an initial value in the target service code block stream includes following steps.

Step D20, periodically restoring the target value of the target field of the OAM code block to the initial value in the target service code block stream according to a preset code block interval.

In an embodiment of the application, a service pipeline of the target service is divided into multiple TCM segments. The source terminal of the TCM segment modifies the original OAM code block into a first OAM code block in the target service code block stream. The value of the target field of the first OAM code block is a target value corresponding to the TCM segment. The sink segment of the TCM segment can monitor the service quality of the corresponding TCM segment by detecting the first OAM code block, thereby implementing layered or segmented monitoring of the service pipeline and improving the monitoring of pipeline quality.

To provide the TCM on the network, the type of the OAM information code block at the layer of TCM is defined. Source devices at different layers of TCM (for example, the first, second, and third TCM segments) need to insert OAM code blocks of this layer type. Sink devices receive the OAM code blocks of this layer type for analysis and detection, to determine the service quality of this TCM segment. However, this implementation requires the source devices of this TCM segment at the current layer to insert new OAM code blocks (OAM code blocks with this layer of TCM). The source devices at each layer of the TCM segment also need to insert OAM code blocks. Inserting OAM code blocks increases the number of service code block streams, reducing transmission speeds. Consequently, some idle code blocks need to be deleted to keep the speed of the service code block stream unchanged. However, in some application scenarios, due to low client speeds and a small number of idle code blocks in the client service stream, new OAM code blocks cannot be inserted into the target service code block stream, so that TCM of the service pipeline cannot be achieved.

Based on this, in the embodiment, the service pipeline of the target service is divided into multiple TCM segments. The source terminal of the TCM segment modifies the original OAM code block into a first OAM code block in the target service code stream. The value of the target field of the first OAM code block is the target value corresponding to the TCM segment, so that TCM can be achieved without inserting additional OAM code blocks of TCM. After receiving the first OAM code block, the sink terminal of the TCM segment restores the first OAM code block to the original OAM code block, and then forwards it to the downstream device. The sink terminal of the TCM segment extracts the information content of the current layer of TCM to achieve the maintenance and management functions of the current layer of TCM.

In technical solutions of the embodiments of the present application, each source device at the layer of TCM does not need to insert a new OAM code block. Instead, the type of the received OAM code block is modified to the OAM type at the current layer of TCM, and the original OAM code block type is then restored at the sink device at the layer of TCM. In this way, the layer of TCM can directly use the OAM code block at the channel layer to disguise the OAM code block of the type at the current layer of TCM, thereby achieving the maintenance and management functions without inserting additional OAM code blocks. In the embodiments of the present application, OAM information of all layers of TCM can be transmitted directly by using the OAM code block at the channel layer, and the TCM field can be expanded based on existing OAM, so that layered TCM is implemented in the network, thereby solving the current technical problems that the service quality of different network layers in a service pipeline cannot be monitored effectively by layers and the monitoring of pipeline quality is poor.

In an embodiment, the target field can be a reserved field of the OAM code block.

In one standard adopted by related technologies, 10th to 11th bits of the OAM code block are reserved bits. Therefore, in an embodiment, the reserved field can be 10th to 11th bits of the OAM code block. As shown in FIG. 10, 10th to 11th bits can be used to indicate the target TCM segment. In this embodiment, the reserved field of the OAM code block can be expanded to a TCM identification field, and the content of the TCM identification field indicates OAM functions at different layers.

In this embodiment, taking the example of dividing the service channels of the target service into three segments as an example, the value of the reserved field can include one of the following.

The first value indicates that the OAM code block is a code block for the first TCM segment. That is, when the value of the reserved field of the OAM code block is the first value, it indicates that the OAM code block is a code block for the first TCM segment, and the OAM code block is used for the service quality of the first segment of the service channel.

The second value indicates that the OAM code block is a code block for the second TCM segment. That is, when the value of the reserved field of the OAM code block is the second value, it indicates that the OAM code block is a code block for the second TCM segment, and the OAM code block is used for the service quality of the second segment of the service channel.

The third value is used to indicate that the OAM code block is a code block for the third TCM segment. That is, when the value of the reserved field of the OAM code block is the third value, it indicates that the OAM code block is a code block for the third TCM segment, and the OAM code block is used for the service quality of the third segment of the service channel.

The fourth value is used to indicate that the OAM code block is the OAM code block at the channel layer. That is, when the value of the reserved field of the OAM code block is the fourth value, it indicates that the OAM code block is an OAM code block at the channel layer, and the OAM code block is used to detect the service quality of the service channel.

In above embodiments, the target value of the reserved field of the first OAM code block includes one of the following: the first value, the second value, or the third value.

In an embodiment, after adopting TCM, the end-to-end monitoring function between the original source device and the sink device is divided into multiple different levels of monitoring. The OAM of the original client service is called channel layer OAM. Above the channel layer, the first layer of TCM (namely, the first-segment TCM), the second layer of TCM (namely, the second-segment TCM), and the third layer of TCM (namely, the third-segment TCM) can be enabled, as shown in FIG. 7, to achieve layered monitoring of the service quality of different network layers (each layer is a sub-network). In implementation, the operator requires the network to support TCM. The existing OAM mechanism can only support the OAM function at one layer and cannot support TCM. To provide the TCM in the network, the type of the OAM information code block at the layer of TCM is defined. The source devices at different layers of TCM need to insert the OAM code block of TCM of this layer type. The sink devices receive the OAM code block of the TCM at this layer and perform analysis and detection to obtain the service quality of the layer of TCM. However, this implementation needs the source device at the layer of TCM to insert the OAM code blocks of TCM. The source device at each layer of TCM needs to insert the OAM code blocks. Inserting the OAM code blocks increases the number of service code block streams. Consequently, some idle code blocks need to be deleted to keep the speed of the service code block stream unchanged. In some application scenarios, due to low client speeds and a small number of idle code blocks in the client service stream, the network intermediate device cannot insert the OAM code blocks at the layer of TCM, so that TCM cannot be implemented.

Based on this, embodiments of the present application provide a method for implementing TCM without the network intermediate device to insert the OAM code blocks at the layer of TCM. In FIG. 5, the network equipment implements channel layer monitoring, and OAM code blocks at the channel layer have been inserted into service streams. These OAM code blocks at the channel layer traverse the source device of the TCM segment in the network. The source device of the TCM segment modifies the content of OAM code block at the channel layer, and modifies OAM code block at the channel layer to an OAM code block at the layer of TCM carrying the layer of TCM identification (namely, the first OAM code block). In this way, TCM information can be sent without inserting an OAM code block at the layer of TCM separately. After receiving the OAM code block, the sink device at the TCM segment extracts and strips the layer of TCM information, modifies the OAM code block into an OAM code block at the channel layer, and forwards it to downstream devices. By extracting current layer of TCM information, the sending device and the receiving device at the layer of TCM can perform maintenance and management functions for current layer of TCM (namely, the target TCM segment). FIG. 6 shows the channel layer OAM function format defined by the China Mobile standard. The 10th to 11th bits are reserved bits, and the default is "00". These reserved bits are expanded to the layered TCM identification field and layered OAM code block functions, as shown in FIG. 10. For example, 10th to 11th bits are defined as the TCM identification fields, and contents of the TCM identification fields represent different layers of OAM functions.

For example, values of the TCM identification field in the OAM code block can be one of the following values.

01, indicating OAM for the first layer (namely, the first segment of TCM.

10, indicating OAM for the second layer of TCM.

11, indicating OAM for the third layer of TCM.

00, indicating channel layer OAM, a reserved value in the current relevant standards.

Of course, it is not limited to this. In specific applications, the meanings of above values may not be limited to above combinations. For example, 11, could indicate OAM for the first layer of TCM. 01, could indicate OAM for the third layer of TCM.

In an embodiment, when the value of the target field of the original OAM code block is a fourth value, the target value is a first value. The fourth value indicates that the OAM code block is an OAM code block at the channel layer.

In addition, when the value of the target field of the original OAM code block is a first value, the target value is a second value.

When the value of the target field of the original OAM code block is a second value, the target value is a third value.

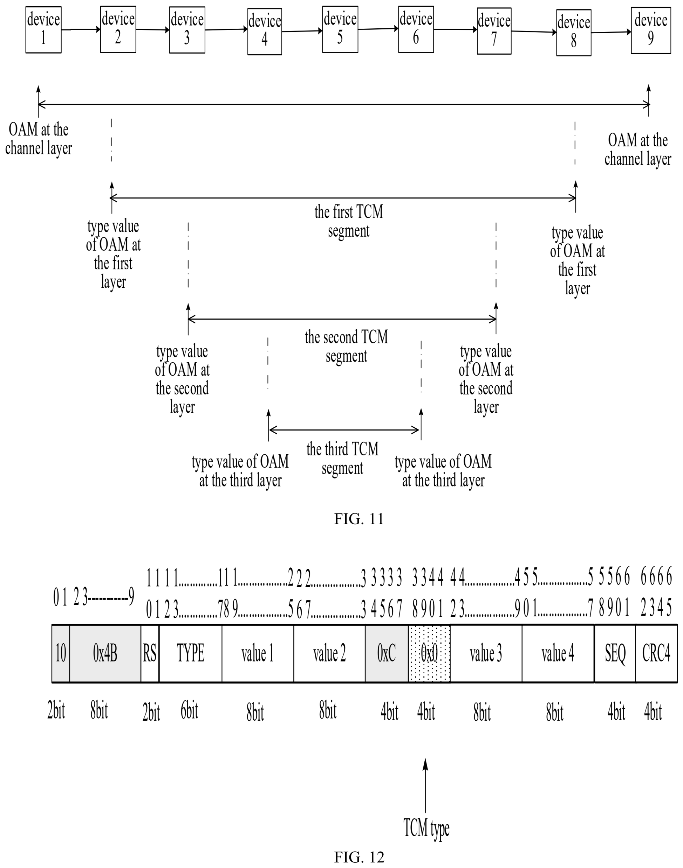

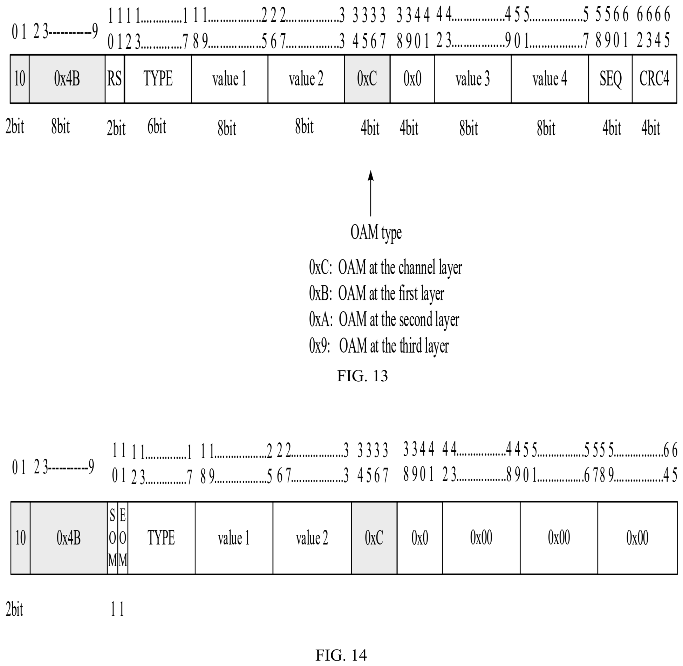

By defining the layered TCM, when applying the current channel layer OAM, devices operate according to the current standard. When sending client messages, the sending device of the service pipeline inserts an OAM code block, and the TCM identification field (called as TCM field) in the OAM code block remains at the standard-defined default value of "00". The sink device receives and extracts the OAM code block to implement service quality monitoring for the service pipeline. When the first layer of TCM is enabled, as shown in FIG. 11, for example, the first layer of TCM (the first TCM segment) function is enabled between the device 2 and the device 8. Both the devices 2 and 8 operate in first layer of TCM mode, following the value of the TCM Identifier field in first layer OAM. However, the device 2 does not insert a new OAM code block at the layer of TCM. Instead, the device 2 modifies the content of OAM code block at the channel layer from the device 1, and replaces OAM code block at the channel layer with the OAM code block corresponding to the first TCM segment. As shown in FIG. 14, 10th to 11th bits of OAM code block at the channel layer sent from the device 1 to the device 2 are defined as the TCM Identifier field, with an identification value of "00", indicating that the OAM code block is an OAM code block at the channel layer. The device 2 changes the TCM identification field value in OAM code block at the channel layer from "00" to "01". This converts the OAM code block from an OAM code block at the channel layer to an OAM code block at the first layer of TCM. The device 2 then transmits the OAM code block, thereby achieving sending of the OAM code block at the first layer of TCM. However, the device 2 does not actually insert additional OAM code blocks. Instead, the device 2 modifies the existing OAM code block at the channel layer into a first layer of TCM code block. The number of OAM code blocks does not change, and the number of code blocks in the client service code block stream does not change, nor does the bandwidth speed of the original client service code block stream change.

Similarly, when the second layer of TCM (the second TCM segment) function is enabled between the device 3 and the device 7, both devices 3 and 7 operate in the second layer OAM function mode, following the value of the second layer OAM TCM identification field. The device 3 receives the OAM code block sent by the device 2. The TCM identification field value in the OAM code block from the device 2 is "01", indicating an OAM code block at the first layer of TCM. The device 3 receives the OAM code block at the first layer of TCM from the device 2 and modifies the TCM identification field value in the OAM code block from "01" to "10". The OAM code block attribute is modified from a first layer of TCM code block to an OAM code block for the second layer of TCM, then the OAM code block for the second layer of TCM is sent to the downstream device 4. The device 3 sends the OAM code block for the second layer of TCM, but does not increase the number of OAM code blocks, and does not change the number of code blocks in the client service code block stream, nor does change the bandwidth speed of the original client service code block stream.

Similarly, when the third layer of TCM (the third TCM segment) function is enabled between the device 4 and the device 6, both the device 4 and the device 6 operate in the third layer of TCM OAM function mode, following the value of the TCM identification field in the third layer OAM. The device 4 receives an OAM code block from the device 3. The value of the TCM identification field in the OAM code block from the device 3 is "10", indicating an OAM code block for the second layer of TCM. The device 4 receives the OAM code block for the second layer of TCM from the device 3, modifies the TCM identification field in the OAM code block from "10" to "11", changes the OAM code block attribute from a code block at the second layer of TCM to an OAM code block for the third layer of TCM, and then sends the OAM code block to the downstream device 5. The device 4 transmits the OAM code block for the third layer of TCM, but it does not increase the number of OAM code blocks, does not change the number of code blocks in the client service code block stream, nor does change the bandwidth speed of the original service code block stream.

The device 5 is an intermediate node device in the network and is not a source terminal or a sink terminal at any layer of TCM. Therefore, the device 5 forwards all received service code blocks (including OAM code blocks at the layer of TCM) to the downstream device 6. The device 6 is a sink device of the third layer of TCM. After receiving the OAM code block, the device 6 detects that the TCM identification field value of the OAM code block is "11", which meets the OAM code block format requirements of the third layer of TCM. According to the content of the OAM code block, the maintenance and management of the third layer of TCM is achieved. For example, according to the reception period of the OAM code block, the monitoring path link of the third layer of TCM is detected to check whether it is interrupted. The device 6 is a sink device of the third layer of TCM. The device 6 needs to terminate the OAM code block for the third layer of TCM, to avoid that the OAM code block for the third layer of TCM is sent to the downstream device 7. Specifically, the device 6 can modify the value of the received third layer of TCM identification field from "11" to "10" and change the OAM code block type from the OAM code block for the third layer of TCM to the OAM code block for the second layer of TCM. In this way, the OAM code block sent by the device 6 becomes an OAM code block for the second layer of TCM.

The device 7 receives the OAM module from the device 6. The TCM identification field value in the received OAM code block is "10", which is the OAM code block for the second layer of TCM. In addition, the device 7 is the sink device of the second layer of TCM. The device 7 receives and detects the OAM code block for the second layer of TCM, and achieves the maintenance and management for the second layer of TCM according to the content of the OAM code block. For example, according to the reception period of the OAM code block, it detects whether the monitoring path link of the second layer of TCM is interrupted. The device 7 is a sink terminal of the second layer of TCM and needs to terminate the OAM code block for the second layer of TCM, to avoid that the OAM code block for the second layer of TCM is sent to the downstream device 8. Specifically, the device 7 modifies the value of the received second layer of TCM identification field from "10" to "01" and changes the OAM code block type from the OAM code block for the second layer of TCM to the OAM code block for the first layer of TCM. In this way, the OAM code block sent by the device 7 becomes an OAM code block for the first layer of TCM.

Similarly, the device 8 receives the OAM code block from the device 7. The TCM identification field value in the received OAM code block is "01", which is the OAM code block at the first layer of TCM. In addition, the device 8 is the sink device of the first layer of TCM. The device 8 receives and detects the OAM code block for the first layer of TCM, and achieves the maintenance and management for the first layer of TCM according to the content of the OAM code block. For example, according to the reception period of the OAM code block, it detects whether the monitoring path link of the first layer of TCM is interrupted. The device 8 is a sink device of the first layer of TCM, and needs to terminate the OAM code block for the first layer of TCM, to avoid that the OAM code block at the first layer of TCM is sent to the downstream device 9. Specifically, the device 8 modifies the value of the first layer of TCM identification field from "(01" to "00", and changes the OAM code block type from the OAM code block for the first layer of TCM to an OAM code block for the channel layer of TCM. In this way, the OAM code block sent by the device 8 is changed to an OAM code block at the channel layer. The device 9 is the sink device carrying client services (namely, the receiving terminal in the service pipeline of the target service) and a receiving device for monitoring the client service at the channel layer. The received TCM identification field value of an OAM code block from the upstream device 8 is 0, which indicates an OAM code block at the channel layer. The OAM code block at the channel layer is extracted, and maintenance and management for the channel layer is achieved based on the content of the OAM code block. In this way, maintenance and monitoring functions for the first layer of TCM, the second layer of TCM and the third layer of TCM are respectively implemented between devices 2 and 8, between devices 3 and 7, and between devices 3 and 6, achieving TCM maintenance and monitoring in the network by layers, without inserting additional OAM code blocks.

Although many details are shown in the above embodiments, they are merely intended to facilitate understanding of the technical concepts and principles of the present application. Simple modifications based on these concepts shall fall within the scope of the present application. In the above embodiments, the OAM code block type at the layer of TCM is defined. When TCM is enabled, the source device of the corresponding layer of TCM modifies other types of received OAM code blocks to the type of the TCM at the current layer, and transmits the OAM code block for the current layer function. After receiving the OAM code block at this layer, the sink device at the layer of TCM in the network implements monitoring of the TCM at this layer based on the received OAM code block. After completing maintenance and monitoring at the current layer of TCM, the sink device at the layer of TCM needs to terminate the OAM code block at the current layer of TCM. Therefore, the sink device should modify the OAM code block type at the current layer of TCM. Following the reverse process of the modification performed by the source device at the current layer of TCM, the OAM code block type is modified and restored to the original OAM code block type (namely, the OAM code block type received by the sink device from the upstream device) before sending it to the downstream device.

In this embodiment of the present application, the source device of each TCM segment does not need to insert a new OAM code block. Instead, it modifies the received OAM type to an OAM type corresponding to the current TCM segment. Then the source device of each TCM segment restores the original OAM code block type. In this way, the layer of TCM can directly use the OAM code block at the channel layer to disguise the OAM code block at the current layer of TCM, achieving layers of TCM without inserting additional OAM code blocks. In this embodiment of the present application, OAM information of all layers of TCM can be transmitted directly by using the OAM code block at the channel layer. The period of OAM code blocks monitored at all layers of TCM can be completely consistent with the period of OAM code block at the channel layer.

In above embodiments, the reserved field at positions of 10th to 11th bits of the OAM code block at the channel layer is expanded, to expand the reserved field to the TCM identification field, thereby creating the OAM code block structure with different layers and implementing layered TCM.

In one standard adopted in related technologies, 38th to 41st bits of the OAM code block are reserved bits. Therefore, in an embodiment, the reserved field can be 38th to 41st bits of the OAM code block.

In the above embodiments, values of the reserved field include one of the following.

A first value, used to indicate that the OAM code block is a code block for the first TCM segment.

A second value, used to indicate that the OAM code block is a code block for the second TCM segment.

A third value, used to indicate that the OAM code block is a code block for the third TCM segment.

A fourth value, used to indicate that the OAM code block is an OAM code block at the channel layer.

A fifth value, as a reserved value, includes all values representable by 38th to 41st bits except the first, second, third, and fourth values.

The target value includes one of the following: the first, second, and third values.

In the above embodiment, contents of 38th to 41st bits of the OAM code block are expanded into a TCM identification field, and different values are used to indicate different usages of the OAM code block. For example, taking a service channel including three layers of TCM (namely, three TCM segments) as an example, the values of 38th to 41st bits of the OAM code block can be:.
0001, indicating OAM for the first layer of TCM.
0010, indicating OAM for the second layer of TCM.
0011, indicating OAM for the third layer of TCM.
0000, indicating channel layer OAM, a reserved value in the current standard.
0100-1111, reserved.

FIG. 12 is a schematic diagram of positions of the expanded TCM identification field in the OAM code block. Although the above diagram illustrates the correspondence between different TCM identification field values and their meanings, it is not limited to this. Other correspondences are also possible, for example, "0101" indicates OAM for the first layer of TCM. "1010" indicates OAM for the second layer of TCM. and "1111" indicates OAM for the third layer of TCM. This is not limited in the present embodiments.

In an embodiment, the target field can also be the feature field of the OAM code block. In a standard adopted in the related art, 34th to 37th bits of the OAM code block are feature bits. Therefore, in an embodiment, the feature field can be 34th to 37th bits of the OAM code block. For example, in the related art, the O-sequence value of 34th to 37th bits of the OAM code block is 0xC, which can be used as the feature value of the OAM code block at the channel layer. To implement TCM, the O-sequence value can be expanded to other values as the standard content of the TCM identification field, and the values of 34th to 37th bits can be used to indicate each TCM segment.

For example, in a service channel consisting of three layers of TCM (namely, three TCM segments), as shown in FIG. 13, the O sequence value is expanded into the TCM identification field. The TCM identification field value can be one of the following:
0xB, indicating OAM for the first layer of TCM.
0xA, indicating OAM for the second layer of TCM.
0x9, indicating OAM for the third layer of TCM.
0xC, indicating OAM at the channel layer, as defined by the current standard field.

Although the above describes the correspondence between different TCM identification field values and their meanings, it is not limited to this, and other correspondences are possible. For example, 0x3 indicates OAM for the first layer of TCM. 0x4 indicates OAM for the second layer of TCM. 0x5 indicates OAM for the third layer of TCM.

In the embodiment of the present application, maintenance and management functions of multiple layers of TCM can be achieved without additionally inserting OAM code blocks, but the maintenance and management functions of the layers of TCM are relatively simple and can only implement the connection monitoring function. The sink device detects the reception state of the OAM code blocks according to the expected period. If the expected type of OAM code blocks cannot be received within multiple consecutive reception periods (generally 3 periods), it means that the source device and the sink device of current layer of TCM are interrupted, and a connection interruption alarm is reported. The connection monitoring function can only monitor whether there is an interruption between the sending device and the sink device in the network, such as a link interruption caused by reasons of the optical fiber being cut or the device being powered off. An interruption fault is a complete interruption in the network link, and the signal cannot be transmitted. In addition to interruption faults, there are also performance degradation faults in the network. Performance degradation means that there is no complete interruption between the source device and the sink device, but the transmitted signal is degraded due to various reasons, and some code errors occur in the transmitted signal, making it impossible to achieve complete correct transmission. For example, if only 95 client service code blocks of 100 client service code blocks are transmitted correctly, and the remaining 5 client service code blocks are erroneous due to signal degradation, the network information transmission accuracy is only 95%. For example, due to optical module power attenuation, the signal-to-noise ratio during signal transmission is high, and some transmitted information is affected by noise and erroneous. In this case, information can still be transmitted between the source terminal and the sink terminal, and the link interruption cannot be detected, but the accuracy of the transmitted information decreases.

In practical applications, the layer of TCM needs to detect signal code errors along the path and determine the link service quality based on the code error rate of the signal transmitted through the optical fiber. When the code error rate reaches a certain threshold, it is determined that quality of signal transmission at the service layer is severely degraded, and protection switching is initiated. In existing standards, code error detection is implemented in the channel layer OAM. A set of error measurement algorithms is designed to measure the number of code errors in the line signal and then calculate the code error rate. In the measurement algorithm for the OAM code error at the current channel layer, the sending terminal calculates the Bit-Interleaved Parity (BIP) values for all code blocks between two OAM code blocks according to a preset algorithm and then transmits this value to the receiving terminal. The receiving terminal also calculates the BIP values for all code blocks between two OAM code blocks according to the same preset algorithm, and compares the calculated BIP result with the BIP values transmitted by the sending terminal. Under the same set of algorithms, if the BIP values newly calculated by the receiving terminal match the BIP values calculated by the sending terminal, it indicates that the content of these client service code blocks remained unchanged during transmission on the link, and no transmission errors occur. If the BIP values newly calculated by the receiving terminal differ from the BIP values calculated by the sending terminal, the difference indicates that the client signal code blocks have changed on the link, and the code errors have occurred.

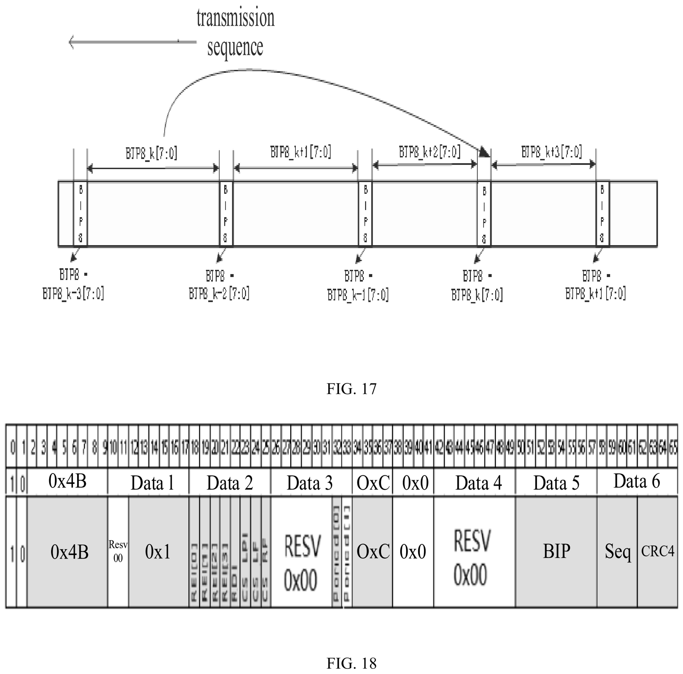

FIG. 17 is the schematic diagram illustrating the channel layer implements the code error detection. First, it is determined that the monitored scope of client code blocks include all code blocks between two adjacent OAM code blocks. All code blocks between the two adjacent OAM code blocks are calculated by using a predetermined BIP algorithm. The calculated BIP value is placed in the subsequent third OAM code block, and then the calculated BIP value is transmitted to the receiving terminal through the subsequent third OAM code block. The receiving terminal, based on the same principles and algorithm, calculates the BIP value for all code blocks between two OAM code blocks in the same monitoring interval. The BIP value calculated by the receiving terminal is compared with the BIP value calculated by the sending terminal. The difference between these two BIP values calculated by the receiving terminal and the sending terminal indicates the number of code errors that occurred during client code block transmission. The accumulated number of code errors is then used to calculate the code error rate of the client signal transmitted by the server layer. All client code blocks between two OAM code blocks are monitored, including S blocks, D blocks, T blocks, O blocks, and idle blocks.

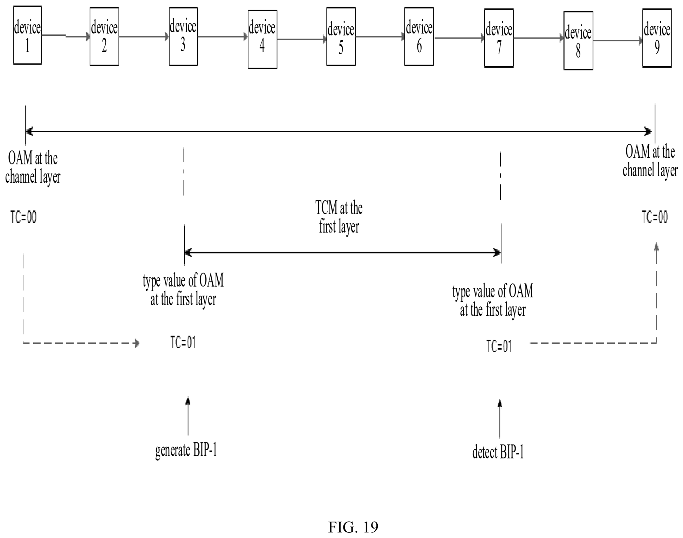

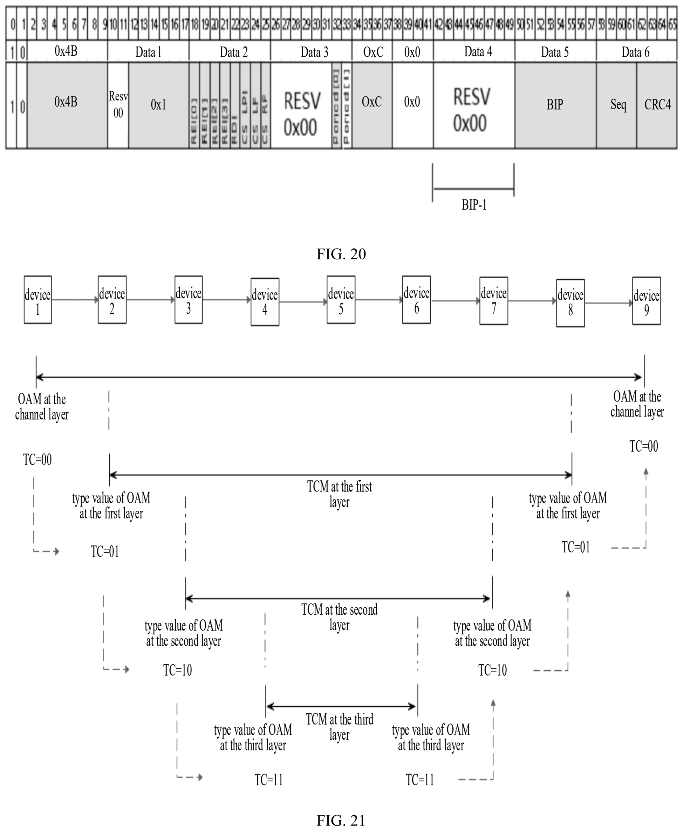

As shown in FIG. 18, FIG. 18 is a schematic diagram of an OAM code block carrying the BIP calculation result of the sending terminal. In the China Mobile standard, it is carried through an OAM code block of sub-type base. The 50th to 57th bits (a total of 8 bits) in this code block carry the BIP8 calculation result of the sending terminal. There are reserved fields in the OAM code block of sub-type base, such as 26th to 31st bits, 38th to 41st bits, and 42nd to 49th bits. The contents of these bits are still enabled. The layer of TCM can also use these reserved bits to transmit the BIP calculation result of the sending terminal at the layer of TCM, to realize the code error monitoring function of the layer of TCM. The specific implementation method is as shown in FIG. 19. In the figure, the device 1 is the sending device at the channel layer, which sends the OAM code block at the channel layer. The TCM field in the code block indicates that the code block is an OAM code block at the channel layer. The first layer of TCM is enabled. The device 3 is the sending device at the layer of TCM, and the device 7 is the receiving device at the layer of TCM. The service quality monitoring function at the layer of TCM between the devices 3 and 7. After the device 3 receives the OAM code block from the device 1, the device 3 modifies the TCM field value in the OAM code block and changes OAM code block type at the channel layer to the OAM code block type at the layer of TCM. The device 3 simultaneously calculates the BIP values of all client service code blocks between two OAM code blocks (labeled as BIP-1, namely, the BIP calculation result of the first layer of TCM), and obtains the BIP calculation result of the sending device at the layer of TCM. Similarly, in the modified reserved field of the OAM code block, for example, the BIP value calculated by the sending device at the layer of TCM is placed at positions of the 42nd to 49th bits in the OAM code block. As shown in FIG. 20, the reserved field at positions of 42nd to 49th bits in the OAM code block has 8 bits and can carry the calculation result value of BIP8. By enabling the reserved field in the OAM code block to carry the BIP calculation result of the layer of TCM, the device 3 also carries the BIP calculation and reception of the layer of TCM while sending the OAM code block. The device 7 is the receiving device at the layer of TCM, which also calculates the BIP value at the layer of TCM by using the same method. By comparing the BIP value calculated by the receiving terminal with the BIP value calculated by the sending terminal, the number of code errors of the layer of TCM transmitting client services can be determined. In this way, the code error rate of client code blocks transmitted at the layer of TCM can be calculated, thereby providing reference data for protection switching at the layer of TCM.

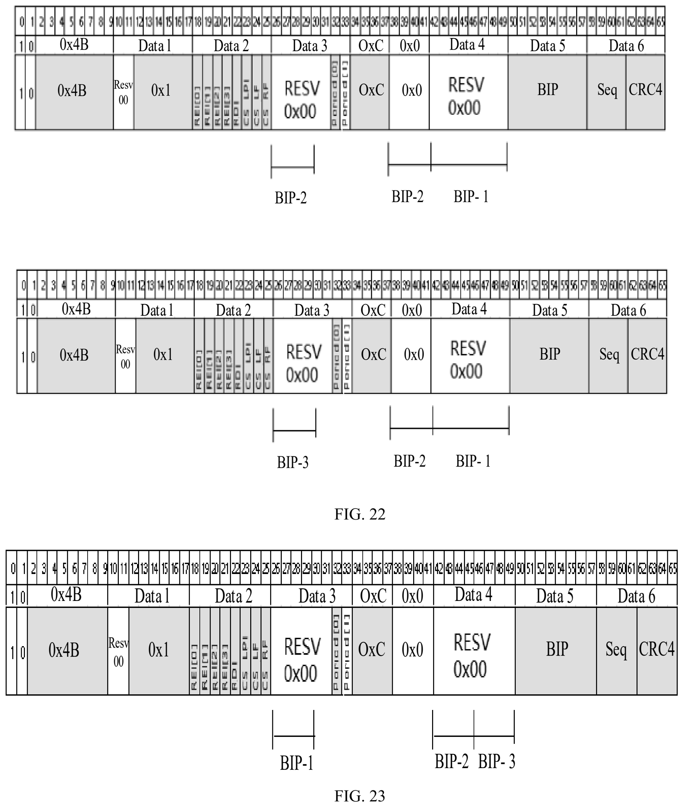

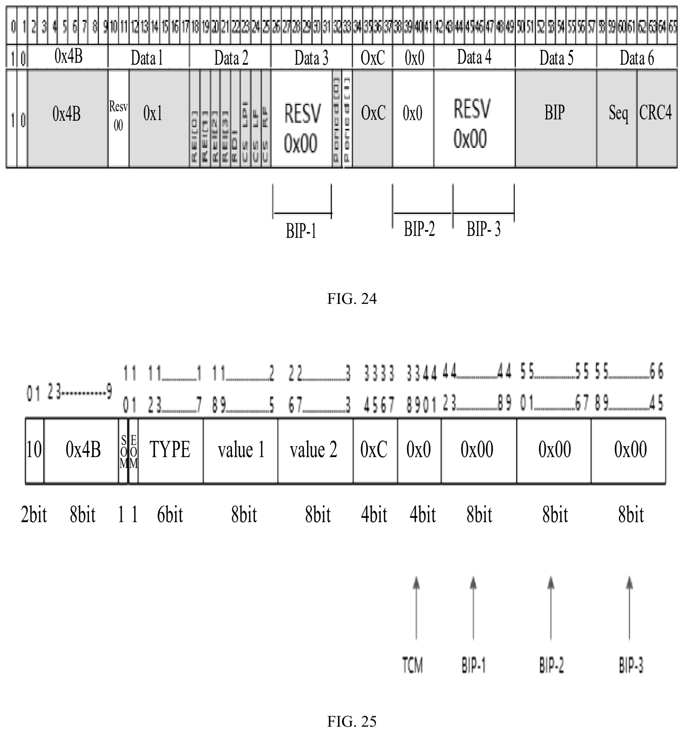

FIG. 19 is a schematic diagram illustrating the layered TCM implementing code error monitoring according to an embodiment. In applications, multiple layers of TCM may be enabled. For example, in FIG. 21, three layers of TCM are enabled. Each layer of TCM needs to achieve code error monitoring function. Therefore, the sending device in the first layer of TCM calculates the BIP value for that layer and transmits it within an OAM code block to the receiving device at the corresponding layer of TCM. The receiving device at the corresponding layer of TCM then calculates the BIP value by using the same algorithm. The calculation result of the receiving device is compared with the calculation result of the sending device, to determine the number of code errors at that layer of TCM, thereby determining the code error rate of that layer. In FIG. 21, three layers of TCM need to be enabled. The sending terminal at the first layer of TCM calculates the BIP value at the first layer of TCM, namely, BIP-1. The sending terminal at the second layer of TCM calculates the BIP value at the second layer of TCM, namely, BIP-2. The sending terminal at the third layer of TCM calculates the BIP value at the third layer of TCM, namely, BIP-3. When the code error monitoring function of three layers of TCM is enabled, the OAM code block should also carry the BIP calculation results (BIP-1, BIP-2, and BIP-3) of three layers of TCM (in addition to the BIP value at the channel layer). If the BIP algorithm uses BIP8, the BIP8 result can be 8 bits. When three layers of TCM are enabled and the BIP8 algorithm is used, the BIP result can be 24 bits. Therefore, a free space for additional 24 bits are required in the OAM code block to transmit the BIP values of three layers of TCM. In the current standard, only 26th to 31st bits, 38th to 41st bits, and 42nd to 49th bits are reserved in the OAM code block of type base, which means there are total positions for 6+4+8=18 reserved bits, and cannot convey the BIP values of three BIP8 (a total of 24 bits). In practical applications, the BIP calculation algorithm can adopt the BIP8 algorithm (the BIP calculation result is the 8-bit value), the BIP6 algorithm (the BIP calculation result is the 6-bit value), or the BIP4 algorithm (the BIP calculation result is the 4-bit value). The number of bits in the BIP algorithm affects the code error detection capability. The BIP algorithm can only accurately detect the number of code errors at low code error rates, and the code error rate has an upper limit during normal operation. For the single-bit BIP1 calculation algorithm (the calculation result is only a single bit value), when using the parity calculation algorithm, if only one bit of the data to be calculated is incorrect, the parity calculation result can identify the error. However, if two bits are incorrect, the parity calculation algorithm cannot detect the error, and can only detect a single code error. To improve the code error detection capability of the BIP algorithm, a multi-bit BIP algorithm is used. The more bits in the BIP calculation result, the greater the number of code errors that can be tolerated during detection, and the corresponding code error rate is greater. The fewer bits in the BIP calculation result, the lower the maximum code error rate that can be tolerated during detection. Considering that the number of bits in the reserved field of the OAM code block in the current standard is limited, when TCM at only one layer is enabled, the BIP algorithm uses BIP8 algorithm. The 8 reserved bits in the OAM code block are used to transmit the BIP8 calculation result sent by the layer of TCM, as shown in FIG. 20. When the TCM at only two layers is enabled, the BIP algorithm uses BIP8 algorithm. The 16 reserved bits in the OAM code block are used to transmit the BIP8 calculation result sent by the layer of TCM, as shown in the upper figure of FIG. 22. When three layers of TCM are enabled, the BIP algorithm for the first layer of TCM uses BIP8 algorithm, and the BIP algorithm for the second and third layers TCM uses BIP4 algorithm. The 8+4+4=16 reserved bits in the OAM code block are used to transmit the BIP calculation result sent by the layer of TCM, as shown in the lower figure of FIG. 22. When multiple layers of TCM are enabled and the number of BIP algorithm data bits used in each layer is different, the first layer of TCM has the longest monitored path among all layers of TCM, and the third layer of TCM has the shortest monitored path. Under the same circumstances, the longer the monitored path, the greater the number of total end-to-end code errors, and the higher the end-to-end code error rate. To prevent the code error rate from reaching the upper monitoring threshold, the BIP algorithm needs to have as many bits as possible. When the first layer of TCM uses the most BIP algorithm bits and the third layer of TCM uses the fewest BIP algorithm bits, the BIP algorithm effectiveness of the three layers of TCM is fully utilized. Therefore, the first layer of TCM uses BIP8 algorithm, while the second and third layers TCM use BIP4 algorithm. In some scenarios, for ease of processing and reduced circuit complexity, all three layers of TCM use the same BIP algorithm. For example, if all three layers of TCM use BIP4 algorithm, only 4+4+4=12 reserved bits are needed to transmit the BIP algorithm results of the layers of TCM, as shown in FIG. 23. Of course, if all three layers of TCM use the BIP6 algorithm, a total of 6+6+6=18 reserved bits are required to transmit the BIP algorithm results at the layer of TCM, as shown in FIG. 24. Whether the layer of TCM BIP algorithm uses BIP8 algorithm, BIP6 algorithm, or BIP4 algorithm, it shall fall within the scope of the embodiments of the present application.

For BIP algorithms using different bit widths, after obtaining BIP algorithm results with multiple bit widths, if a BIP algorithm with fewer bit widths is needed, the longer bit width BIP algorithm result can be simply shortened. In other words, the longer bit width BIP algorithm result can be simply reduced to the shorter bit width BIP algorithm result. For example, when using the BIP8 algorithm to obtain the BIP calculation result, the result is an 8-bit data value, represented by BIP8[7:0]. When the BIP4 calculation result is needed, the calculation result is a 4-bit data value, represented by BIP4[3:0]. The BIP8 algorithm result can be simply reduced to the BIP4 algorithm result by recalculating the 2-bit data bit in the BIP8 algorithm result into 1 bit. For example, BIP4[0] is equal to the calculation result of BIP8[0] and BIP8[1]. BIP4[1] is equal to the calculation result of BIP8[2] and BIP8[3]. BIP4[2] is equal to the calculation result of BIP8[4] and BIP8[5]. BIP4[3] is equal to the calculation result of BIP8[6] and BIP8[7]. Of course, other combinations are also possible, for example, BIP4[0] is equal to the calculation result of BIP8[0] and BIP8[4]. BIP4[1] is equal to the calculation result of BIP8[1] and BIP8[5]. BIP4[2] is equal to the calculation result of BIP8[2] and BIP8[6]. BIP4[3] is equal to the calculation result of BIP8[3] and BIP8[7]. The layer of TCM requires BIP. A similar method can be used, to convert the 4-bit value in BIP8 into a 2-bit value (other bits remain unchanged). For example, BIP6[0] = BIP8[0]. BIP6[1] = BIP8[1]. BIP6[2] = BIP8[2]. BIP6[3] = BIP8[3]. BIP6[4] is equal to the calculation result of BIP8[4] and BIP8[6]. BIP6[5] is equal to the calculation result of BIP8[5] and BIP8[7].

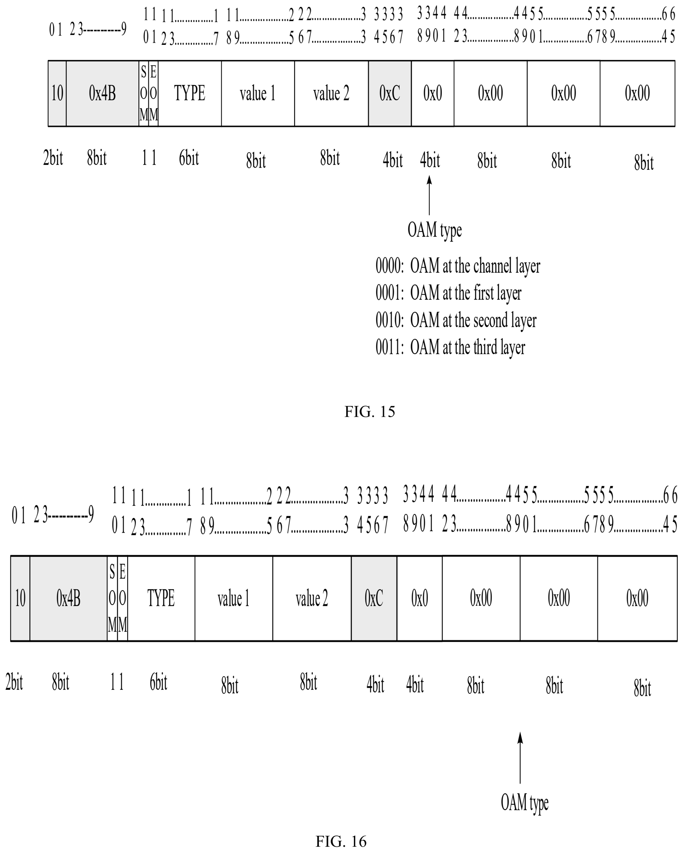

In addition, in the related art, another OAM code block format is provided, as shown in FIG. 14. For this format of the OAM code block, the reserved positions of 38th to 41st bits of the OAM code block can be expanded to TCM, as shown in FIG. 15. In this implementation, 38th to 41st bits of the OAM code block are expanded to form a TCM identification field. The TCM identification field can take one of the following values:
0001, indicating OAM for the first layer of TCM.
0010, indicating OAM for the second layer of TCM.
0011, indicating OAM for the third layer of TCM.
0000, indicating OAM at the channel layer, which is a reserved value in the current China Mobile standard.
0100-1111, reserved

The TCM identification field shown in FIG. 15 is optional and can be expanded to other values in a specific implementation. For example, "0101" indicates OAM for the first layer of TCM. "1010" indicates OAM for the second layer of TCM. "1111" indicates OAM for the third layer of TCM. Furthermore, as shown in FIG. 16, the TCM identification field can also be located anywhere between 42nd to 65th bits of the code block.

The ITU has established many reserved bits in the OAM code block format at the channel layer for MTN devices. 42nd to 65th bits contain 24 reserved bits, which can support three sets of BIP8 calculation results. When three layers of TCM are supported and code error detection is enabled for each layer of TCM, the sending device at each layer of TCM can calculate the BIP value for that layer. The reserved field carries the BIP calculation results of the sending terminal, as shown in FIG. 25, this carries the BIP calculation results of the sending device at three layers of TCM, such as BIP-1, BIP-2, and BIP-3.

In the technical solutions according to the embodiments of the present application, OAM code block types at different layers are defined by expanding the TCM identification field. The original OAM code block is modified to the OAM code block type of the current layer at the source terminal of the corresponding layer network. The OAM block for this layer is extracted and stripped in the sink device of the network at this layer. The OAM blocks that are analyzed and extracted in the sink device of the current layer internet are used to implement service quality monitoring and protection switching when the device fails. When implementing layered TCM in a network, the original OAM code block is modified at each layer to the OAM code block type for the current layer. As layers are added, the number of inserted OAM code blocks remains unchanged, enabling layer of TCM maintenance and management without inserting additional OAM code blocks. Current standards define various types of OAM code blocks, such as basic code blocks, protection switching code blocks, delay measurement code blocks, and client identification code blocks, to respectively meet functional requirements for code error detection, channel connection monitoring, connection verification, far-end errors, far-end faults, delay measurement, fast protection switching, client signal failure, and client signal. At the channel layer, all functional requirements generally need to be implemented. In other layered TCM networks, only fast protection switching is typically required, with no need for delay measurement or other functions. Therefore, for the layered TCM, only one or two OAM code blocks, including the basic code block and the protection switching code block, need to be modified. Modifications to delay measurement and client identification code blocks are not necessary. This significantly reduces the number of OAM code blocks when multi layers of TCM are enabled.

Although the above embodiments list several possible positions for the target field, it is not limited to this. In specific applications, the target field can also be located elsewhere within the OAM code block.

Furthermore, while the above embodiments of the present application use three TCM segments as an example, it is not limited to this. In specific applications, the number of TCM segments can be flexibly set based on the number of transmission nodes in the channel carrying the service. For example, if the service channel includes a total of seven transmission nodes (namely, communication devices), two TCM segments can be set. If the service channel includes eleven transmission nodes, three or four TCM segments can be set. If the service channel includes more transmission nodes, more TCM segments can be set, or two or three segments can be maintained. The number of bits occupied by the corresponding target field can be determined by the number of TCM segments, which is not specifically limited in the embodiments of the present application.

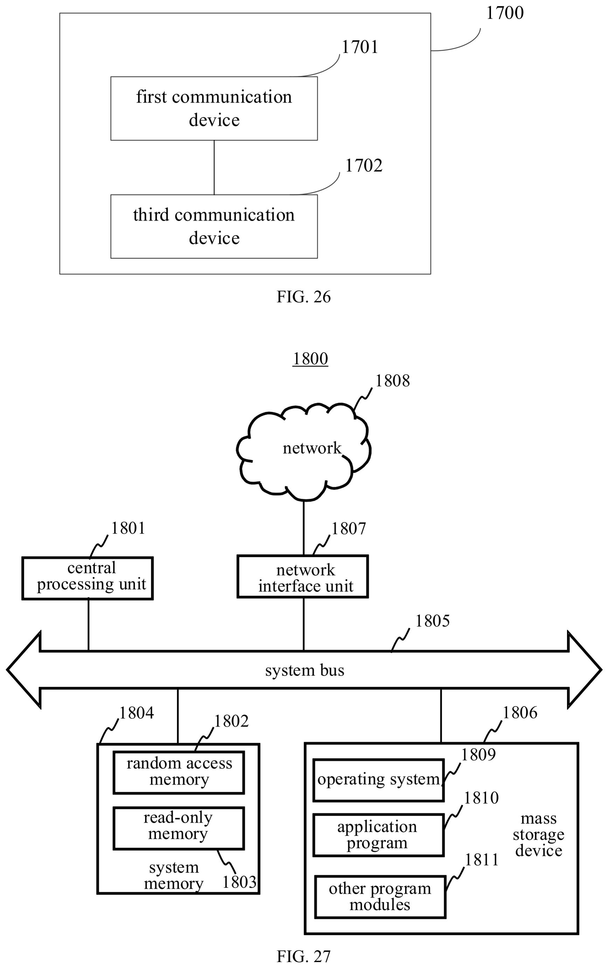

FIG. 26 shows a schematic diagram of a system for monitoring service quality according to an embodiment of the present application. As shown in FIG. 26, the system 1700 mainly includes a first communication device 1701 configured to implement the method performed by the first communication device, as described in the aforementioned method embodiment, which will not be limited here. The system 1700 further includes a third communication device 1702 configured to implement the method performed by the third communication device, as described in the aforementioned method embodiment, which will not be limited here.

FIG. 27 shows a block diagram of a communication device 1800 according to an embodiment of the present application. This communication device can be configured as the cloud terminal management platform or a cloud server with a cloud terminal, as described in the aforementioned solutions of the present application. The communication device 1800 includes a central processing unit (CPU) 1801, a system memory 1804 including a random access memory (RAM) 1802 and a read-only memory (ROM) 1803, and a system bus 1805 connecting the system memory 1804 and the CPU 1801. The communication device 1800 further includes a mass storage device 1806 for storing an operating system 1809, a client-side 1810, and other program modules 1811.

Without loss of generality, the computer-readable medium may include a computer storage medium and a communication medium. The computer storage medium includes the volatile and non-volatile, removable and non-removable media implemented in any method or technology for storing information, such as computer-readable instructions, data structures, program modules, or other data. The computer storage medium includes RAM, ROM, erasable programmable read-only memory (EPROM), electrically-erasable programmable read-only memory (EEPROM), flash memory or other solid-state storage technologies, CD-ROM, digital versatile disc (DVD) or other optical storage, magnetic cassettes, magnetic tape, magnetic disk storage or other magnetic storage devices. Of course, those skilled in the art will understand that the computer storage medium are not limited to the aforementioned types. The aforementioned system memory 1804 and the mass storage device 1806 may be collectively referred to as the memory.

According to various embodiments of the present application, the communication device 1800 may also be connected to a remote computer on a network via a network such as the internet. That is, the communication device 1800 may be connected to a network 1808 via a network interface unit 1807 connected to the system bus 1805. Or, the network interface unit 1807 may be used to connect the communication device 1800 to other types of networks or remote computer systems (not shown in the accompanying drawings).

The memory further includes at least one instruction, at least one program, code set, or instruction set. The at least one instruction, at least one program, code set, or instruction set can be stored in the memory. The central processor 1801 executes the at least one instruction, at least one program, code set, or instruction set to implement all or part of the steps in the method for transmitting the service code block stream or the method for monitoring service quality described in the above-mentioned embodiments.

In an embodiment, a computer-readable storage medium is further provided. The computer-readable storage medium stores at least one computer program. The computer program is loaded and executed by the processor to implement all or part of the steps in the method for transmitting the service code block stream or the method for monitoring service quality. For example, the computer-readable storage medium may be the ROM, the RAM, a compact disc (CD-ROM), a magnetic tape, a floppy disk, or an optical data storage device.

In an embodiment, a computer program product is further provided. The computer program product includes at least one computer program, which is loaded by a processor and executes all or part of the steps of the method for transmitting the service code block stream, or all or part of the steps of the method for monitoring service quality, as described in any of the above embodiments.

Those skilled in the art will readily recognize other embodiments of the present application after considering the specification and practicing the application disclosed herein. This application is intended to cover any variations, usages, or adaptations of the present application that follow the general principles of the present application and include common knowledge or customary techniques in the art not disclosed herein. The description and examples can be considered as exemplary only. The true scope and spirit of the present application are indicated by the claims.

It should be understood that the present application is not limited to the precise structure described above and shown in the drawings, and various modifications and variations may be made without departing from the scope thereof. The scope of the present application is limited only by the appended claims.

## Claims

1. A method for transmitting a service code block stream, applied to a first communication device, **characterized by** comprising:
receiving a target service code block stream sent by a second communication device, wherein the first communication device and the second communication device are communication devices in a service pipeline carrying a target service, and the first communication device is configured as a source terminal of a target tandem connection monitor, abbreviated as TCM, segment;
modifying an original operation administration maintenance, abbreviated as OAM, code block into a first OAM code block in the target service code block stream, wherein a value of a target field of the first OAM code block is a target value corresponding to the target TCM segment; and
transmitting a modified target service code block stream.

2. The method according to claim 1, wherein the target field is a reserved field of the OAM code block.

3. The method according to claim 2, wherein the reserved field refers to 10th to 11th bits of the OAM code block.

4. The method according to claim 2, wherein the reserved field refers to 38th to 41st bits of the OAM code block.

5. The method according to claim 1, wherein the target field is a feature field of the OAM code block.

6. The method according to claim 5, wherein the feature field refers to 34th to 37th bits of the OAM code block.

7. The method according to any one of claims 1 to 6, wherein the target value comprises one of the following:
a first value, configured to indicate the OAM code block being a code block of a first TCM segment;
a second value, configured to indicate the OAM code block being a code block of a second TCM segment; and
a third value, configured to indicate the OAM code block being a code block of a third TCM segment.

8. The method according to claim 7, further comprising:
in response to that a value of the target field of the original OAM code block is a fourth value, the target value being the first value, wherein the fourth value is configured to indicate the OAM code block being an OAM code block at a channel layer.

9. The method according to claim 7, further comprising:
in response to that a value of the target field of the original OAM code block is the first value, the target value being the second value; and
in response to that a value of the target field of the original OAM code block is the second value, the target value being the third value.

10. The method according to any one of claims 1 to 6, wherein the modifying the original OAM code block to the first OAM code block in the target service code block stream comprises:
modifying an initial value of the target field of the OAM code block in the target service code block stream to the target value, to modify the original OAM code block to the first OAM code block in the target service code block stream.

11. The method according to claim 10, wherein the modifying the initial value of the target field of the OAM code block to the target value in the target service code block stream comprises:
periodically modifying the initial value of the target field of the OAM code block to the target value at a preset code block interval in the target service code block stream.

12. A method for monitoring service quality, applied to a third communication device, **characterized by** comprising:
receiving a target service code block stream sent by a fourth communication device, wherein the third communication device and the fourth communication device are communication devices in a service pipeline carrying a target service, and the third communication device is configured as a sink terminal for a target tandem connection monitor, abbreviated as TCM, segment;
detecting a first operation administration maintenance, abbreviated as OAM, code block in the target service code block stream to monitor service quality of the target TCM segment, wherein a value of a target field of the first OAM code block is a target value corresponding to the target TCM segment; and
restoring the first OAM code block to an original OAM code block in the target service code block stream, and transmitting a restored target service code block stream to a fifth communication device, wherein the original OAM code block refers to the OAM code block before being modified into the first OAM code block, and the fifth communication device is a communication device located downstream of the third communication device in the service pipeline.

13. The method according to claim 12, wherein the target field is a reserved field of the OAM code block.

14. The method according to claim 13, wherein the reserved field refers to 10th to 11th bits of the OAM code block.

15. The method according to claim 13, wherein the reserved field refers to 38th to 41st bits of the OAM code block.

16. The method according to claim 12, wherein the target field is a feature field of the OAM code block.

17. The method according to claim 16, wherein the feature field refers to 34th to 37th bits of the OAM code block.

18. The method according to any one of claims 12 to 17, wherein the target value comprises one of the following:
a first value, configured to indicate the OAM code block being a code block of a first TCM segment;
a second value, configured to indicate the OAM code block being a code block of a second TCM segment; and
a third value, configured to indicate the OAM code block being a code block of a third TCM segment.

19. The method according to claim 18, further comprising:
in response to that a value of the target field of the original OAM code block is a fourth value, the target value being the first value, wherein the fourth value is configured to indicate that the OAM code block is an OAM code block at a channel layer.

20. The method according to claim 18, further comprising:
in response to that a value of the target field of the original OAM code block is the first value, the target value being the second value; and
in response to that a value of the target field of the original OAM code block is the second value, the target value being the third value.

21. The method according to any one of claims 12 to 17, wherein the restoring the first OAM code block to the original OAM code block in the target service code block stream comprises:
restoring the target value of the target field of the OAM code block to an initial value in the target service code block stream, to restore the first OAM code block to the original OAM code block in the target service code block stream, wherein the initial value refers to a value before being modified to the target value.

22. The method according to any one of claims 12 to 17, wherein the detecting the first OAM code block in the target service code block stream to monitor the service quality of the target TCM segment comprises:
detecting a first OAM code block in the target service code block stream; and
determining whether a service carrying pipeline between a source terminal of the target TCM segment and the sink terminal of the target TCM segment is faulty according to a detected first OAM code block.

23. The method according to claim 22, further comprising:
in response to determining the service carrying pipeline between the source terminal of the target TCM segment and the sink terminal of the target TCM segment is faulty, switching the service carrying pipeline between the source terminal of the target TCM segment and the sink terminal of the target TCM segment.

24. A system for monitoring service quality, **characterized by** comprising:
a first communication device, configured to implement the method for transmitting the service code block stream according to any one of claims 1 to 11; and
a third communication device, configured to implement the method for monitoring service quality according to any one of claims 12 to 23.

25. A communication device, **characterized by** comprising a processor and a memory, the memory storing a program or an instruction executable by the processor, wherein when the program or the instruction is executed by the processor, the method for transmitting the service code block stream according to any one of claims 1 to 11 is implemented, and/or the method for monitoring service quality according to any one of claims 12 to 23 is implemented.

26. A computer-readable storage medium, **characterized by** storing a program or an instruction, wherein when the program or the instruction is executed by a processor, the method for transmitting the service code block stream according to any one of claims 1 to 11 is implemented, and/or the method for monitoring service quality according to any one of claims 12 to 23 is implemented.
